# EUROPÄISCHE PATENTSCHRIFT

(11) **EP 3 072 635 B1**
(45) Veröffentlichungstag und Bekanntmachung des Hinweises auf die Patenterteilung: **20.10.2021**
(21) Anmeldenummer: 16000311.7
(22) Anmeldetag: 08.02.2016
(51) Int. Cl.: B23Q 1/76, B23Q 1/62

(54) **VORRICHTUNG ZUM ABSTÜTZEN EINES ZU BEARBEITENDEN WERKSTÜCKS**
DEVICE FOR SUPPORTING A WORKPIECE TO BE MACHINED
DISPOSITIF DE SOUTIEN D'UNE PIECE A USINER

(30) Priorität: 16.03.2015 DE 102015003367
(43) Veröffentlichungstag der Anmeldung: 28.09.2016
(73) Patentinhaber: VOLLMER WERKE Maschinenfabrik GmbH, 88400 Biberach/Riss (DE)
(72) Erfinder: Bergbaur, Michael, 8322 Graberberg/St. Marein b. Graz (AT)
(74) Vertreter: Thum, Bernhard

(56) Entgegenhaltungen:
- WO-A1-2008/092504
- WO-A1-2012/126840
- DE-A1-102011 053 980
- US-A1- 2007 261 522
- None

## Beschreibung

Die vorliegende Erfindung betrifft eine Vorrichtung zum Abstützen eines von einer Werkzeugmaschine zu bearbeitenden Werkstücks mit:
- wenigstens einem Abstützelement, das mit dem abzustützenden Werkstück in Kontakt bringbar ist,
- wenigstens einer ersten Positionierungseinheit zum Positionieren des wenigstens einen Abstützelements in zumindest einer ersten Richtung, und
- wenigstens einer zweiten Positionierungseinheit zum Positionieren des wenigstens einen Abstützelements in zumindest einer zweiten Richtung,
wobei die erste Richtung und die zweite Richtung zueinander senkrecht verlaufen, und wobei zumindest eine von erster oder zweiter Positionierungseinheit derart ausgebildet ist, dass die Position des wenigstens einen Abstützelements in der der jeweiligen Positionierungseinheit zugeordneten Richtung durch eine elastische Deformation wenigstens eines elastisch deformierbaren Abschnitts einstellbar ist.

Aus dem Stand der Technik sind verschiedene Vorrichtungen zum Abstützen eines zu bearbeitenden Werkstücks bekannt. Derartige Vorrichtungen werden unter anderem auch als Lünetten bezeichnet.

DE 10 2011 053 980 A1 offenbart eine Lünette mit einem Stützkörper, in dem eine Stütznut in einer Erstreckungsrichtung verläuft. In der Stütznut kann ein zylindrisches Werkstück abgestützt werden. Die Lünette weist zur Ausrichtung und Positionierung der Stütznut mehrere Einstellachsen auf, die von zwei linearen Einstellachsen und einer Schwenkeinstellachse gebildet werden. Jede Einstellachse dient zur Relativverstellung zweier Einstellteile in einer betreffenden Einstellrichtung. Um ein versehentliches Verstellen einer Einstellachse zu verhindern, ist jeder Einstellachse jeweils ein Klemmmittel zugeordnet. Jedes Klemmmittel kann eine Klemmkraft zwischen den beiden Einstellteilen einer Einstellachse erzeugen, wobei die Klemmkraft quer bzw. rechtwinklig zur Einstellrichtung der betreffenden Einstellachse ausgerichtet ist.

DE 199 62 796 A1 offenbart eine Vorrichtung zum Schleifen von Werkzeugen. Die Vorrichtung umfasst eine Lünette zur Führung des zu schleifenden Werkzeugs. Die Vorrichtung umfasst zwei Führungsbahnen mit zwei inneren Seitenflächen, die in zur Längsachse des zu schleifenden Werkzeugs parallel verlaufen und einen Winkel zur Aufnahme des zu schleifenden Werkzeugs einschließen. Das zu schleifende Werkzeug liegt mit seiner kreisförmigen Außenumfangsfläche zumindest an zwei der inneren Seitenflächen der Führungsbahnen an.

EP 0 299 915 A2 offenbart eine Einrichtung zum Bearbeiten eines Werkstücks. Ein Werkstück ist in einer Zange eingespannt und liegt mit seinem Schaft und mit seinem zu bearbeitenden Abschnitt je auf einem unabhängig einstellbaren Auflager auf. Diese Auflager können in mehreren Richtungen feineingestellt werden.

Wo 2006/108316 A1 offenbart eine einstellbare Halterungsvorrichtung, bei der über die Betätigung verschiedener Hebel Schwenkbewegungen von verlagerbaren Komponenten ausgelöst werden können.

DE 10 2005 006 242 A1 offenbart eine Schleifmaschine. Diese weist ein Maschinenbett und eine an diesem angeordnete, das zu bearbeitende Werkstück aufnehmende Werkstückspindel sowie eine neben dem Werkstück angeordnete Schleifstation mit einer Schleifspindel zur Aufnahme eines Schleifwerkzeugs auf und ist mit einem am Maschinenbett zur Unterstützung des Werkstücks an der Schleifstelle angeordneten Werkstückführungssystem versehen. Das Werkstückführungssystem weist eine Werkstückaufnahme und eine Einstellvorrichtung auf, mit der die Werkstückaufnahme in ihrem Höhenabstand und Seitenabstand von der Achse der Werkstückspindel bzw. des darin eingespannten Werkstückes einstellbar ist. Die Einstellvorrichtung weist Festlagerkörper und an Widerlagern angebrachte Stellglieder in Form von Piezoantrieben auf, die mit den Festlagerkörpern zusammen wirken.

US 2007/261522 A1 offenbart eine Vorrichtung nach dem Oberbegriff des Anspruchs 1.

Die voranstehend beschriebenen und aus dem Stand der Technik bekannten Vorrichtungen haben allesamt einen relativ komplexen Aufbau mit einer großen Anzahl von Einzelteilen.

Es ist eine Aufgabe der vorliegenden Erfindung eine Vorrichtung zum Abstützen von zu bearbeitenden Werkstücken bereitzustellen, die einen einfachen und kompakten Aufbau aufweist und eine spielfreie Einstellung der Position des Abstützelements ermöglicht.

Diese Aufgabe wird mit einer Vorrichtung mit den in Anspruch 1 angegebenen Merkmalen gelöst.

Weitere Ausführungsformen sind in den beigefügten abhängigen Ansprüchen angegeben.

Bei der erfindungsgemäßen Vorrichtung weist die erste Positionierungseinheit wenigstens ein Federmittel und wenigstens eine Stellschraube auf, wobei zur Einstellung der Position des wenigstens einen Abstützelements der wenigstens eine elastisch deformierbare Abschnitt der wenigstens einen ersten Positionierungseinheit mittels der wenigstens einen Stellschraube entgegen der Vorspannkraft oder in Richtung der Vorspannkraft des wenigstens einen Federmittels verlagerbar ist.

Durch die Einstellbarkeit der Position des wenigstens einen Abstützelements mittels einer elastischen Deformation in Interaktion mit der wenigstens einen Stellschraube und dem wenigstens einen Federmittel kann die Einstellung der Position spielfrei und damit hochpräzise erfolgen. Ferner wird durch die erfindungsgemäße Art der Positionierung ein einfacher, kompakter und damit platzsparender Aufbau der Vorrichtung zum Abstützen eines von der Werkzeugmaschine zu bearbeitenden Werkstücks erreicht.

Gemäß der Erfindung wirken das wenigstens eine Federmittel und das wenigstens eine Stellglied zur Einstellung der Position des wenigstens einen Abstützelements zusammen. Durch das wenigstens eine Federmittel mit seiner vorbestimmten Vorspannkraft kann der elastisch deformierbare Abschnitt in eine vorbestimmte Richtung vorgespannt werden. Da der deformierbare Abschnitt über die wenigstens eine Stellschraube entgegen der Vorspannkraft oder in Richtung der Vorspannkraft des wenigstens einen Federmittels verlagert werden kann, kann die erste Positionierungseinheit in jeder eingestellten Position einen stabilen bzw. selbsthaltenden Zustand einnehmen. Zusätzliche Fixiermittel sind in dem Fall zum Einhalten der eingestellten Position nicht notwendig.

Die Vorrichtung gemäß der Erfindung ist derart ausgebildet, dass die Einstellung der Position des wenigstens einen Abstützelements in der ersten Richtung vollständig unabhängig von der Einstellung der Position des Abstützelements in der zweiten Richtung erfolgt. Bei den aus dem Stand der Technik bekannten Vorrichtung muss häufig bei der Einstellung der Position des Abstützelements in einer ersten Richtung gezwungenermaßen auch die Position des Abstützelements in einer zweiten Richtung korrigiert bzw. nachgestellt werden. Dies ist bei der Vorrichtung gemäß der Erfindung nicht notwendig, da die Einstellung der Position in der ersten Richtung getrennt von der Einstellung der Position in der zweiten Richtung erfolgt.

Zudem können sowohl die wenigstens eine erste und die wenigstens eine zweite Positionierungseinheit derart ausgebildet sein, dass die Position des wenigstens einen Abstützelements in der der jeweiligen Positionierungseinheit zugeordneten Richtung durch eine elastische Deformation einstellbar ist.

Unter einer elastischen Deformation ist in diesem Zusammenhang eine reversible bzw. umkehrbare Verformung zu verstehen, die von nicht dauerhafter Natur ist.

Gemäß einer Ausführungsform der Erfindung kann zur Positionierung des wenigstens einen Abstützelements wenigstens ein Abschnitt der wenigstens einen ersten Positionierungseinheit unter einer elastischen Deformation wenigstens eines elastisch deformierbaren Abschnitts relativ zu wenigstens einem stationären Abschnitt der wenigstens einen ersten Positionierungseinheit verlagerbar sein. In gleicher Weise kann zur Positionierung des wenigstens einen Abstützelements wenigstens ein Abschnitt der wenigstens einen zweiten Positionierungseinheit unter einer elastischen Deformation wenigstens eines elastisch deformierbaren Abschnitts relativ zu wenigstens einem stationären Abschnitt der wenigstens einen zweiten Positionierungseinheit verlagerbar sein.

Die wenigstens eine erste Positionierungseinheit und/oder die wenigstens eine zweite Positionierungseinheit kann wenigstens ein elastisch deformierbares Element aufweisen. Das wenigstens eine elastisch deformierbare Element kann einen stationären Abschnitt und einen zu dem stationären Abschnitt relativ verlagerbaren Abschnitt aufweisen. Das wenigstens eine elastisch deformierbare Element kann zwischen seinem stationären Abschnitt und dem verlagerbaren Abschnitt wenigstens einen Abschnitt aufweisen, der eine reduzierte Steifigkeit aufweist, und eine Relativbewegung zwischen dem stationären Abschnitt und dem verlagerbaren Abschnitt unter einer elastischen Deformation zulässt.

Der stationäre Abschnitt und der relativ verlagerbare Abschnitt des wenigstens einen elastisch deformierbaren Elements der ersten Positionierungseinheit und/oder der zweiten Positionierungseinheit können über wenigstens ein Biegeelement miteinander verbunden sein. Das wenigstens eine Biegeelement kann einen elastisch deformierbaren Abschnitt bilden. Das wenigstens eine Biegeelement weist verglichen mit dem wenigstens einen stationären Abschnitt und dem wenigstens einen bewegbaren Abschnitt eine reduzierte Biegesteifigkeit auf, sodass eine elastische Deformation des Biegeelements möglich wird. Aufgrund dieser elastischen Deformation kann der bewegbare Abschnitt relativ zu dem stationären Abschnitt verlagert werden. Beispielsweise kann eine derartige reduzierte Biegesteifigkeit des wenigstens einen Biegeelements durch eine Reduzierung des Querschnitts des elastisch deformierbaren Elements im Bereich des wenigstens einen Biegeelements erreicht werden. Anders ausgedrückt weisen der stationäre Abschnitt und der relativ verlagerbare Abschnitt verglichen mit der Biegesteifigkeit des wenigstens einen Biegeelements eine erhöhte Biegesteifigkeit auf. Eine derartige Reduzierung der Biegesteifigkeit kann beispielsweise durch Ausnehmungen, Bohrungen und Nuten im Bereich zwischen dem verlagerbaren Abschnitt und dem stationären Abschnitt, d.h. im Bereich des wenigstens einen Biegeelements, des wenigstens einen elastisch deformierbaren Elements erreicht werden.

Der stationäre Abschnitt, der relativ verlagerbare Abschnitt und das wenigstens eine Biegeelement des wenigstens einen elastisch deformierbaren Elements der ersten Positionierungseinheit und/oder der zweiten Positionierungseinheit können einstückig ausgebildet sein. Da das wenigstens eine elastisch deformierbare Element der wenigstens einen ersten Positionierungseinheit und/oder der wenigstens einen zweiten Positionierungseinheit ein Einzelteil darstellt und dennoch eine Positionierung des wenigstens einen Abstützelements erlaubt, kann die Vorrichtung gemäß dieser Ausführungsform verglichen mit den Vorrichtungen gemäß dem Stand der Technik mit erheblich weniger Teilen ausgeführt werden und benötigt deutlich weniger Bauraum. Das wenigstens ein Federmittel der wenigstens einen ersten Positionierungseinheit kann das wenigstens eine Biegeelement in eine vorbestimmte Richtung vorspannen. Das wenigstens eine Federmittel kann beispielsweise ein Tellerfederpaket sein, das das wenigstens eine Biegeelement in eine vorbestimmte Richtung bzw. vorbestimmte Position vorspannt. Die Position, in die das wenigstens eine Federelement das wenigstens eine Biegeelement vorspannt, kann mit der Ausgangsposition des wenigstens einen Abstützelements übereinstimmen. In der Ausgangsposition verläuft das wenigstens eine Biegeelement des elastisch deformierbaren Elements der Positionierungseinheit schräg zur Vorspannkraft des wenigstens einen Federmittels.

Durch diese Schrägstellung des wenigstens einen Biegeelements wird der verlagerbare Abschnitt und damit das wenigstens eine Abstützelement in vertikaler Richtung zur Einstellung der Position verlagert. Neben der Verlagerung in vertikaler Richtung findet auch eine Verlagerung in horizontaler Richtung statt. Diese horizontale Verlagerung findet in Richtung der Längsachse des Werkstücks statt und dient dazu, eine (ausreichende) Verlagerung in vertikaler Richtung zu erzeugen. Zur Abstützung des Werkstücks und zur Positionierung des wenigstens einen Abstützelements ist jedoch die von der Vorrichtung gemäß der Erfindung bereitgestellte Einstellbarkeit der Position des wenigstens einen Abstützelements in vertikaler Richtung (erste Richtung) und in einer Richtung (zweite Richtung) quer zur Längsachse des Werkstücks wesentlich bzw. ausschlaggebend. Das wenigstens eine elastisch deformierbare Element kann derart ausgebildet sein, dass der verlagerbare Abschnitt und der stationäre Abschnitt zusammen mit dem schräg verlaufenden wenigstens einen Biegeelement ein Parallelogramm bilden.

Die wenigstens eine zweite Positionierungseinheit können wenigstens eine Stellschraube zum Einstellen der Position des wenigstens einen Abstützelements aufweisen. Die wenigstens eine Stellschraube der wenigstens einen ersten Positionierungseinheit und/oder der wenigstens einen zweiten Positionierungseinheit kann dementsprechend dazu dienen, den verlagerbaren Abschnitt des elastischen deformierbaren Elements der ersten Positionierungseinheit oder der zweiten Positionierungseinheit relativ zu dem stationären Abschnitt des elastischen Elements zu verlagern.

Gemäß einer Ausführungsform der Erfindung kann mit der wenigstens einen Stellschraube der wenigstens einen ersten Positionierungseinheit das wenigstens eine Biegeelement entgegen der Vorspannkraft oder in Richtung der Vorspannkraft des wenigstens einen Federmittels verlagert werden. Die Stellschraube kann sich parallel zur Richtung der Vorspannkraft erstrecken. Je nachdem in welche Richtung das Abstützelement bewegt werden soll, kann mit der wenigstens einen Stellschraube der wenigstens einen ersten Positionierungseinheit eine Verlagerung des wenigstens einen Biegeelements und damit des wenigstens einen verlagerbaren Abschnitts in Richtung der Vorspannkraft des Federmittels oder gegen die Vorspannkraft des Federmittels zugelassen werden.

Die wenigstens eine Stellschraube der wenigstens einen zweiten Positionierungseinheit kann gemäß einer Weiterbildung der Erfindung mit dem verlagerbaren Abschnitt des wenigstens einen elastischen Elements in Eingriff stehen. Die wenigstens eine Stellschraube der wenigstens einen zweiten Positionierungseinheit kann sich an dem stationären Abschnitt abstützen. Die wenigstens eine Stellschraube der wenigstens einen zweiten Positionierungseinheit kann sich auch am Boden einer Öffnung in dem stationären Abschnitt abstützen. Mit der wenigstens einen Stellschraube der wenigstens einen zweiten Positionierungseinheit kann somit das Biegeelement unmittelbar bewegt werden, um den verlagerbaren Abschnitt relativ zu dem stationären Abschnitt des wenigstens einen elastisch deformierbaren Elements zu bewegen.

Die eingestellte Position der wenigstens einen zweiten Positionierungseinheit kann mittels wenigstens eines Fixierelements fixiert werden. Die Position des verlagerbaren Abschnitts relativ zu dem stationären Abschnitt des elastisch deformierbaren Elements der wenigstens einen zweiten Positioniereinheit wird über die wenigstens eine Stellschraube eingestellt. Die eingestellte Position wird dann über das wenigstens eine Fixierelement festgelegt bzw. fixiert. Das wenigstens eine Fixierelement kann beispielsweise eine Fixierplatte sein. Die Fixierplatte kann über Verbindungsmittel mit dem wenigstens einen elastisch deformierbaren Element der zweiten Positionierungseinheit verbindbar sein. Die Fixierplatte kann sowohl mit dem stationären Abschnitt als auch dem verlagerbaren Abschnitt des elastisch deformierbaren Elements verbindbar sein, um die eingestellte Position zu fixieren und die Steifigkeit des elastisch defomierbaren Elements zu erhöhen.

Die wenigstens eine Positionierungseinheit kann mit der wenigstens einen zweiten Positionierungseinheit koppelbar sein. Dabei kann die wenigstens eine erste Positionierungseinheit mit dem verlagerbaren Abschnitt der wenigstens einen zweiten Positionierungseinheit koppelbar sein. In diesem Fall ist die wenigstens eine erste Positionierungseinheit zusammen mit dem Abstützelement über die wenigstens eine zweite Positionierungseinheit in der der zweiten Positionierungseinheit zugeordneten Richtung verlagerbar.

An dem verlagerbaren Abschnitt der wenigstens einen zweiten Positionierungseinheit kann ein Montageflansch zum Anbringen der ersten Positionierungseinheit vorgesehen sein.

Zwischen der wenigstens einen ersten Positionierungseinheit und der wenigstens einen zweiten Positionierungseinheit kann wenigstens eine Hubeinrichtung vorgesehen sein. Die wenigstens eine Hubeinrichtung dient dazu, einen relativ großen Stellweg beispielsweise in vertikaler Richtung bereitzustellen. Die wenigstens eine Hubeinrichtung kann dazu dienen, das Abstützelement an das wenigstens eine Werkstück anzunähern, bevor mit der wenigstens einen ersten Positionierungseinheit die Feineinstellung der Position des Abstützelements relativ zu dem Werkstück in vertikaler Richtung vorgenommen wird.

Gemäß einer Ausführungsform der Erfindung kann zumindest die wenigstens eine zweite Positionierungseinheit mit einer Werkzeugmaschine koppelbar bzw. verbindbar sein.

Die vorliegende Erfindung betrifft ferner eine Werkzeugmaschine mit einer Vorrichtung der voranstehend beschriebenen Art.

Im Folgenden wird eine Ausführungsform der vorliegenden Erfindung beispielhaft mit Bezug auf die beigefügten Figuren beschrieben. Es stellen dar:
- Figur 1: eine perspektivische Ansicht der erfindungsgemäßen Vorrichtung;
- Figur 2: eine Schnittansicht der ersten Positionierungseinheit der Vorrichtung gemäß der Erfindung;
- Figur 3: eine weitere perspektivische Ansicht der Vorrichtung gemäß der Erfindung;
- Figur 4: eine perspektivische Ansicht der zweiten Positionierungseinheit;
- Figur 5: eine teilweise aufgebrochene Draufsicht der Vorrichtung gemäß der Erfindung; und
- Figur 6: eine vergrößerte Ansicht des aufgebrochenen Abschnitts gemäß Figur 5.

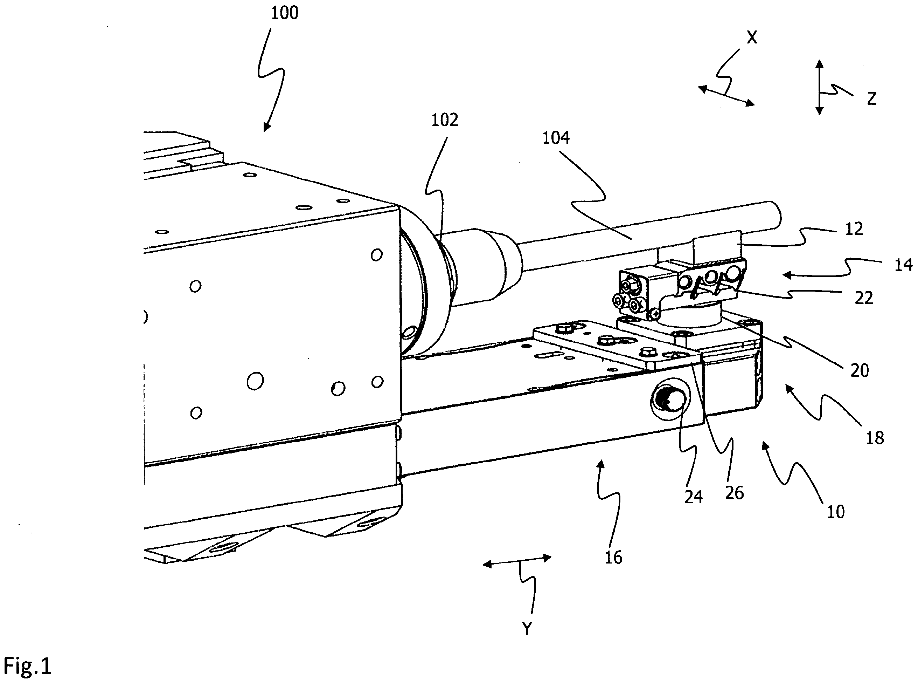

Figur 1 zeigt eine perspektivische Ansicht der erfindungsgemäßen Vorrichtung 10 in einem an einer Werkzeugmaschine 100 angebrachten Zustand.

Die Werkzeugmaschine 100 weist ein Spannfutter 102 auf, in dem ein stabförmiges Werkstück 104 eingespannt ist. Das Werkstück 104 wird durch die Vorrichtung 10 abgestützt. Die Vorrichtung 10 weist ein Abstützelement 12, eine erste Positionierungseinheit 14 und eine zweite Positionierungseinheit 16 auf. Die erste Positionierungseinheit 14 ist über eine Koppeleinheit 18 mit der zweiten Positionierungseinheit 16 gekoppelt. Die Koppeleinheit 18 weist eine Hubeinrichtung 20 in Form eines Hubzylinders auf. Der Hubzylinder 20 dient dazu, die erste Positionierungseinheit 14 in Z-Richtung an das Werkstück 104 anzunähern, bevor die Position des Abstützelements 12 in Z-Richtung über die erste Positionierungseinheit 14 feineingestellt wird. In der feineingestellten Position des Abstützelements 12 kann das Abstützelement 12 bzw. die Vorrichtung 10 das Werkstück 104 bzw. dessen von der Spannmutter 102 distales Ende abstützen. Die erste Positionierungseinheit 14 umfasst ein elastisch defomierbares Element 22, das zwischen dem Hubzylinder 20 und dem Abstützelement 12 vorgesehen ist.

In X-Richtung erfolgt die Einstellung der Position des Abstützelements 12 über die zweite Positionierungseinheit 16.Eine grobe Einstellung auf die Werkstücklänge erfolgt durch Verlagern der zweiten Positionierungseinheit 16 in Y-Richtung.

In Figur 1 ist ferner eine Stellschraube 24 der zweiten Positionierungseinheit 16 erkennbar. Die Positionierungseinheit 16 umfasst zudem ein Fixierelement 26 in Form einer Fixierplatte, über die die eingestellte Position der zweiten Positionierungseinheit 16 fixiert werden kann. Über die zweite Positionierungseinheit 16 kann die Position des Abstützelements 12 in horizontaler Richtung, d. h. in X-Richtung eingestellt werden.

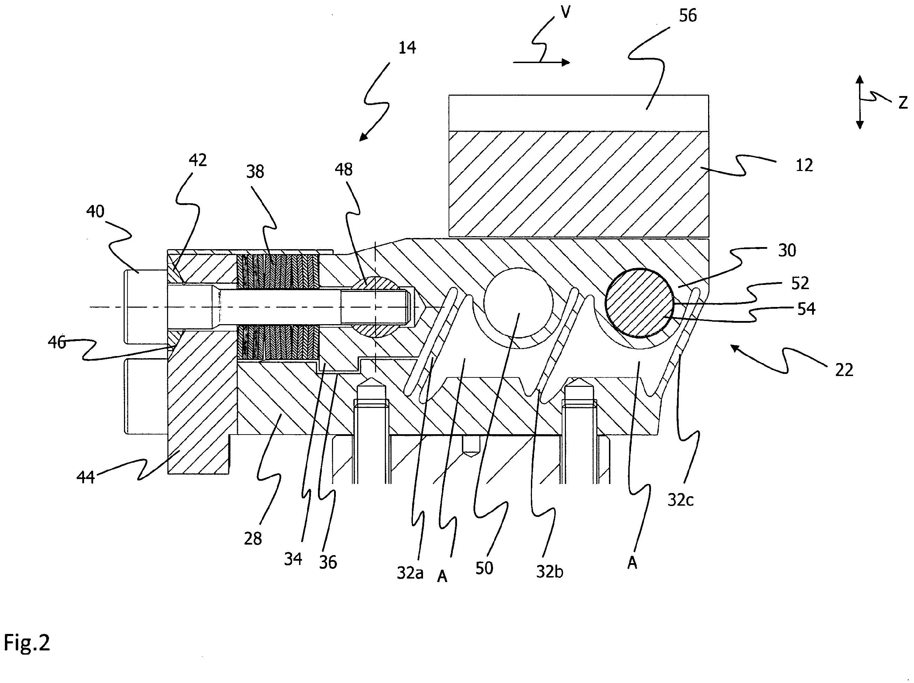

Figur 2 zeigt eine Schnittansicht der ersten Positionierungseinheit 14 mit dem daran angebrachten Abstützelement 12.

Die erste Positionierungseinheit 14 umfasst ein elastisch deformierbares Element 22. Das elastisch deformierbare Element 22 umfasst einen stationären Abschnitt 28 und einen relativ zu diesem stationären Abschnitt 28 verlagerbaren Abschnitt 30. An dem Abschnitt 30 ist das Abstützelement 12 angebracht. Der stationäre Abschnitt 28 und der verlagerbare Abschnitt 30 sind über Biegeelemente 32a, 32b und 32c miteinander verbunden. Die Biegeelemente 32a, 32b und 32c bilden einen elastisch deformierbaren Abschnitt. Die Biegeelemente 32a, 32b und 32c sind in Form von Biegestegen ausgebildet. Zwischen den Biegestegen 32a, 32b und 32c sind Ausnehmungen A ausgebildet. Die Biegeelemente 32a, 32b und 32c weisen verglichen mit dem stationären Abschnitt 28 und dem verlagerbaren Abschnitt 30 eine reduzierte Steifigkeit auf, sodass durch die elastische Deformation der Biegeelemente 32a, 32b und 32c eine Verlagerung des verlagerbaren Abschnitts 30 relativ zu dem stationären Abschnitt 28 erreicht wird. In dem stationären Abschnitt 28 ist eine Nut 34 ausgebildet, in die ein Vorsprung 36 des verlagerbaren Abschnitts 30 mit Spiel eingreift. Die Nut 34 und der Vorsprung 36 dienen dazu, eine Anschlagfunktion bereitzustellen, um eine Überbeanspruchung bzw. eine zu große elastische Deformation der Biegeelemente 32a, 32b und 32c zu verhindern.

Die erste Positionierungseinheit 14 weist ferner ein Federmittel in Form eines Tellerfederpakets 38 auf. Das Federpaket 38 wirkt mit einer Stellschraube 40 zusammen. Die Stellschraube 40 erstreckt sich durch das Federpaket 38 hindurch. Die Stellschraube 40 erstreckt sich durch eine Kugelscheibe 42 und ein Stützelement 44 in den verlagerbaren Abschnitt 30 hinein. Die Kugelscheibe 42 ist in dem Stützelement 44 in einer korrespondierenden Ausnehmung 46 aufgenommen. In dem verlagerbaren Abschnitt 30 ist ein Gelenkbolzen 48 vorgesehen, mit dem die Stellschraube 40 verschraubt ist.

Das Tellerfederpaket 38 spannt den verlagerbaren Abschnitt 30 in Richtung des Pfeils V vor, d. h. in Figur 2 wirkt die Vorspannkraft des Federpakets 38 nach rechts in Richtung des Pfeils V. Die Stellschraube 40 erstreckt sich in Richtung der Vorspannkraft des Federpakets 38, d.h. parallel zu dem Pfeil V. Wird die Stellschraube 40 weiter in dem Gelenkbolzen 48 eingeschraubt, wird das Tellerfederpaket 38 komprimiert. Dadurch wird der verlagerbare Abschnitt 30 entgegen der Richtung des Pfeils V bewegt, d. h. in Figur 2 nach links, wodurch sich aufgrund der abgewinkelt verlaufenden Biegeelemente 32a, 32b und 32c der verlagerbare Abschnitt 30 und damit auch das Abstützelement 12 leicht in Z-Richtung vertikal nach oben bewegt wird. Eine Verstellung der Stellschraube um 0,3 Millimeter ergibt in etwa eine Verstellung des Abstützelements in vertikaler Richtung, d. h. in Z-Richtung des Abstützelements 12 von 0,15 Millimetern.

Wird die Stellschraube 40 aus dem Gelenkbolzen 48 herausgeschraubt, wird der verlagerbare Abschnitt 30 in Richtung des Pfeils V aufgrund der Vorspannkraft des Tellerfederpakets 38 in Richtung des Pfeils V bewegt. Die Nut 34 und der Vorsprung 36 verhindern dann eine Überbeanspruchung der Biegeelemente 32a, 32b und 32c, da die Nut 34 als Anschlag für den Vorsprung 36 dient und somit eine größere Verlagerung des verlagerbaren Abschnitts 30 in Richtung des Pfeils V verhindert.

Die Biegeelemente 32a, 32b und 32c verlaufen abgewinkelt bzw. schräg zur vertikalen Richtung zur Vorspannkraft des Federpakets 38, d.h. die Biegeelemente 32a, 32b und 32c verlaufen abgewinkelt zum Pfeil V.

In dem verlagerbaren Abschnitt 30 sind ferner Öffnungen 50 und 52 erkennbar. In den Öffnungen 50, 52 sind Befestigungsmittel 54 aufgenommen (nur eines gezeigt), die mit dem Abstützelement 12 verbunden sind.

Das Abstützelement 12 weist ferner eine Auflagefläche 56 auf, die schalenförmig ausgebildet sein kann und zur abschnittsweisen Aufnahme eines Werkstücks 104 dient (siehe Figur 1).

Zusammenfassend ist bezüglich der ersten Positionierungseinheit 14 folgendes festzuhalten: Wird der verlagerbare Abschnitt über die Stellschraube 40 entgegen der Richtung des Pfeils V bewegt, so wird der verlagerbare Abschnitt 30 mit dem Abstützelement 12 angehoben. Wird der verlagerbare Abschnitt 30 über die Stellschraube 40 in Richtung des Pfeils V bewegt, so wird der verlagerbare Abschnitt 30 und das Abstützelement 12 abgesenkt.

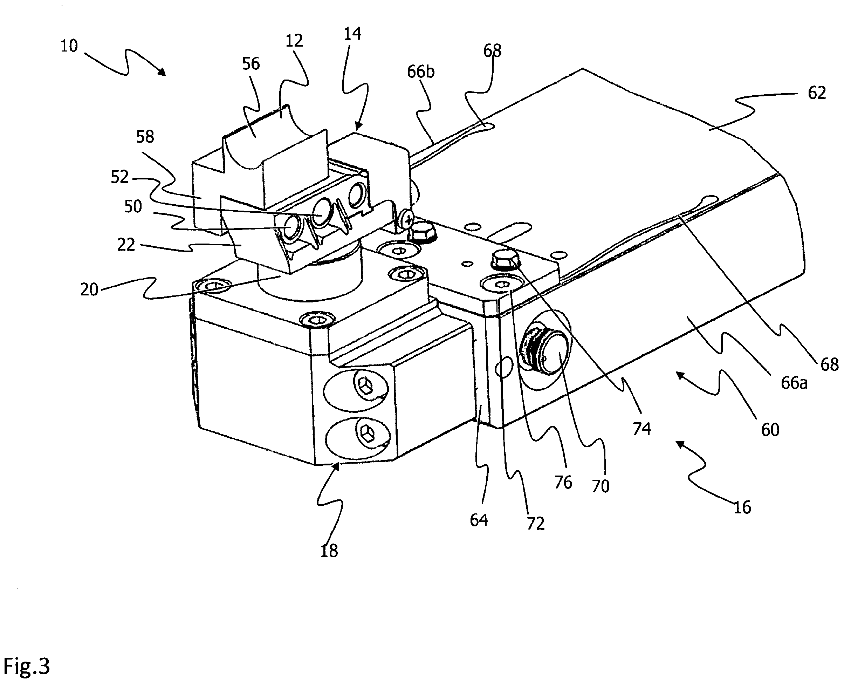

Figur 3 zeigt eine perspektivische Ansicht der Vorrichtung 10.

Das Abstützelement 12 ist an der ersten Positionierungsvorrichtung 14 bzw. dessen elastisch deformierbaren Element 22 angebracht. In Figur 3 ist ein Abschnitt 58 des Abstützelements 12 erkennbar, der sich an eine Seitenfläche des elastisch deformierbaren Elements 22 anlegt. An diesem Abschnitt 58 können die Befestigungselemente 54 vorgesehen sein.

Die erste Positionierungseinheit 14 ist über die Koppeleinheit 18 mit dem Hubzylinder 20 mit der zweiten Positionierungseinheit 16 verbunden. Die zweite Positionierungseinheit 16 weist ein elastisch defomierbares Element 60 auf. Das elastische deformierbare Element 60 umfasst einen stationären Abschnitt 62 und einen verlagerbaren Abschnitt 64 auf. Der verlagerbare Abschnitt 64 ist mit dem stationären Abschnitt 62 über Biegeelemente 66a und 66b verbunden. Die Biegeelemente 66a, 66b und der verlagerbare Abschnitt 64 sind von dem stationären Abschnitt 60 über einen Spalt 68 getrennt. Die Position des verlagerbaren Abschnitts 62 relativ zu dem stationären Abschnitt 62 kann über die Stellschraube 70 eingestellt werden. Wurde die Position des verlagerbaren Abschnitts 64 relativ zu dem stationären Abschnitt 60 über die Stellschraube 70 eingestellt, wird diese eingestellte Position über die Fixierplatte 72 und die Schrauben 74 und 76 fixiert. Die Schrauben 74 werden dabei mit dem stationären Abschnitt 62 in Eingriff gebracht. Die Schrauben 76 werden mit dem verlagerbaren Abschnitt 64 verbunden, um die Relativposition zwischen dem verlagerbaren Abschnitt 62 und dem stationären Abschnitt 64 zu sichern.

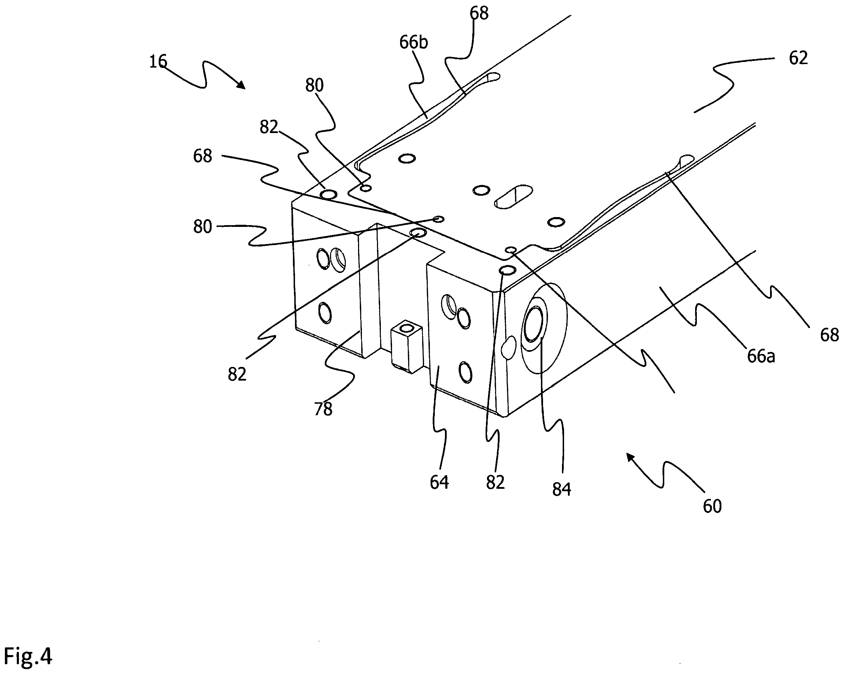

Figur 4 zeigt eine perspektivische Ansicht der zweiten Positionierungseinheit 16.

Der Spalt 68 trennt den stationären Abschnitt 62 der zweiten Positionierungseinheit 16 von den Biegeelementen 66a, 66b und dem verlagerbaren Abschnitt 64. An dem verlagerbaren Abschnitt 64 ist ein Montageflansch 78 ausgebildet, an dem die erste Positionierungseinheit 14 über die Koppeleinheit 18 (siehe Figur 3) angebracht werden kann. In dem stationären Abschnitt 62 sind die Öffnungen 80 erkennbar, die mit den Schrauben 74 der Fixierplatte 72 in Eingriff gebracht werden können. An dem verlagerbaren Abschnitt 64 sind die Öffnungen 82 gezeigt, die mit den Schrauben 76 der Fixierplatte 72 in Eingriff gebracht werden können. Durch die Öffnungen 80, 82 und die Schrauben 74, 76 der Fixierplatte 72 kann die Relativposition des verlagerbaren Abschnitts 62 relativ zu dem stationären Abschnitt 62 fixiert werden. Ferner kann über die Fixierplatte 72 die zweite Positionierungseinheit 16 versteift werden.

In dem verlagerbaren Abschnitt 64 ist ferner eine Öffnung 84 erkennbar, durch die sich die Stellschraube 70 erstrecken kann.

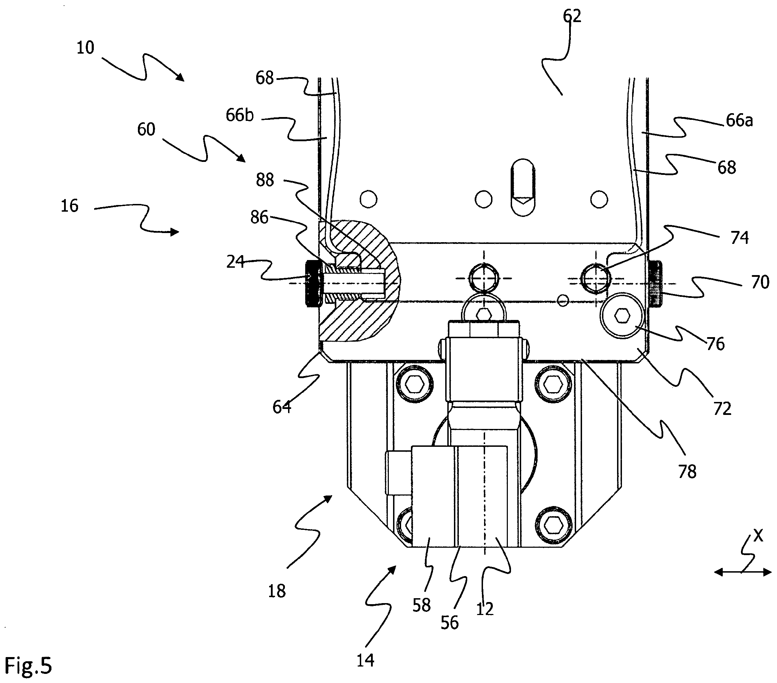

Figur 5 zeigt eine teilweise aufgebrochene Draufsicht der Vorrichtung 10.

Die erste Positionierungseinheit 14 ist über die Koppeleinheit 18 an der zweiten Positionierungseinheit 16 angebracht. In dem aufgebrochenen Abschnitt der Draufsicht gemäß Figur 5 ist eine Stellschraube 24 erkennbar, die über eine Gewindehülse 86 mit dem verlagerbaren Abschnitt 64 verschraubt ist. Die Justierschraube 24 erstreckt sich in eine Öffnung 88 in dem stationären Abschnitt 62 hinein und stützt sich an dieser Öffnung 88 ab. Mit anderen Worten wird der stationäre Abschnitt 62 zwischen den Stellschrauben 24 und 70 eingespannt, um die Position des verlagerbaren Abschnitts 64 relativ zu dem stationären Abschnitt 62 einzustellen. Die Stellschrauben 24 und 70 sind in einem Bereich vorgesehen, in dem der Spalt 68 parallel zur Außenkante der zweiten Positionierungseinheit 16 verläuft.

Ferner ist in Figur 5 erkennbar, dass die Ausnehmung 68 im Bereich der Biegeelemente 66a und 66b eine größere Breite aufweist als im Bereich der Stellschrauben 24 und 70 bzw. im Bereich des Montageflansches 78. Diese größere Breite des Spalts 68 im Bereich der Biegeelemente 66a und 66b ist notwendig, um eine vorbestimmte Elastizität der Biegeelemente 66a und 66b und einen vorbestimmten Stellweg für die Positionseinstellung bereitstellen zu können.

Im Bereich des Montageflansches 78 und im Bereich der Stellschrauben 24 und 70 verläuft die Ausnehmung bzw. der Spalt 68 im entspannten Zustand im Wesentlichen parallel zu den Außenkanten der zweiten Positionierungseinheit 16.

Wird eine der Stellschrauben 24 oder 70 weiter in die Gewindehülse 86 eingeschraubt und die jeweils andere Stellschraube 24, 70 aus der Gewindehülse ausgeschraubt, wird der verlagerbare Abschnitt 64 in X-Richtung zu der weiter in die Gewindehülse 86 eingeschraubten Stellschraube 24 oder 70 hin verlagert, wobei die Biegeelemente 66a oder 66b elastisch deformiert werden.

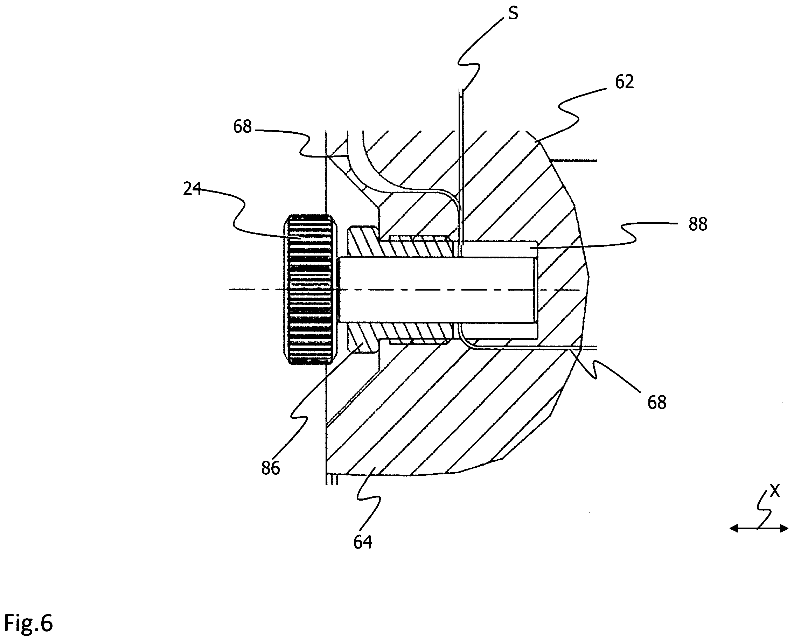

Figur 6 zeigt eine vergrößerte Ansicht des aufgebrochenen Abschnitts gemäß Figur 5.

In Figur 6 ist die Stellschraube 24 und die Gewindehülse 86 erkennbar. Die Gewindehülse 86 ist in eine Öffnung in dem verlagerbaren Abschnitt 64 eingeschraubt. Die Stellschraube 24 erstreckt sich in eine Öffnung 88 in dem stationären Abschnitt 62 hinein und liegt mit ihrem axialen Ende an dem Boden der Öffnung 88 an.

Die Breite des Spalts 68 im Bereich der Stellschraube 24 entspricht dem maximalen Stellweg S, um den der verlagerbare Abschnitt 64 relativ zu dem stationären Abschnitt 62 verlagert werden kann. Wird die Stellschraube 24 weiter in die Gewindehülse 86 eingeschraubt, wird der verlagerbare Abschnitt 64 relativ zu dem stationären Abschnitt 62 in X-Richtung in Figur 6 nach links gedrückt. Eine derartige Einstellung ist nur über den vorbestimmten Stellweg S möglich. Die andere Stellschraube 70 (Fig.5) muss in diesem Fall in entsprechendem Maß aus dem verlagerbaren Abschnitt 64 herausgeschraubt werden, um eine entsprechende Einstellung zu ermöglichen.

Die Vorrichtung 10 gemäß der Erfindung weist einen kompakten Aufbau auf, der nur sehr wenig Bauraum benötigt. Durch die Einstellbarkeit in vertikaler Richtung (Z-Richtung) und in horizontaler Richtung (X-Richtung) aufgrund einer elastischen Deformation wird eine spielfreie Einstellung der horizontalen und vertikalen Position des Abstützelements 12 zur Abstützung des Werkstücks 104 erreicht. Ferner können die horizontale Position und die vertikale Position des Abstützelements 12 mit den Positioniereinheiten 14 und 16 voneinander unabhängig gestellt werden.

## Patentansprüche

1. Vorrichtung (10) zum Abstützen eines von einer Werkzeugmaschine (100) zu bearbeitenden Werkstücks (104), mit
- wenigstens einem Abstützelement (12), das mit dem abzustützenden Werkstück (104) in Kontakt bringbar ist,
- wenigstens einer ersten Positionierungseinheit (14) zum Positionieren des wenigstens einen Abstützelements (12) in zumindest einer ersten Richtung (Z),
- wenigstens einer zweiten Positionierungseinheit (16) zum Positionieren des wenigstens einen Abstützelements (12) in zumindest einer zweiten Richtung (X), wobei die erste Richtung (Z) und die zweite Richtung (X) zueinander senkrecht verlaufen,
wobei zumindest eine von erster oder zweiter Positionierungseinheit (14, 16) derart ausgebildet ist, dass die Position des wenigstens einen Abstützelements (12) in der der jeweiligen Positionierungseinheit (14, 16) zugeordneten Richtung (X, Z) durch eine elastische Deformation wenigstens eines elastisch deformierbaren Abschnitts einstellbar ist,
wobei die erste Positionierungseinheit (14) wenigstens ein Federmittel (38) und wenigstens eine Stellschraube (40) aufweist, wobei zur Einstellung der Position des wenigstens einen Abstützelements (12) der wenigstens eine elastisch deformierbare Abschnitt der wenigstens einen ersten Positionierungseinheit (14) mittels der wenigstens einen Stellschraube (40) entgegen der Vorspannkraft (V) oder in Richtung der Vorspannkraft (V) des wenigstens einen Federmittels (38) verlagerbar ist, wobei die wenigstens eine erste Positionierungseinheit (14) wenigstens ein elastisch deformierbares Element (22) aufweist, das einen stationären Abschnitt (28) und einen zu dem stationären Abschnitt (28) relativ verlagerbaren Abschnitt (30) aufweist, wobei der stationäre Abschnitt (28) und der relativ verlagerbare Abschnitt (30) des wenigstens einen elastisch deformierbaren Elements (22) der ersten Positionierungseinheit (14) über wenigstens ein Biegeelement (32a, 32b, 32c) miteinander verbunden sind, **dadurch gekennzeichnet, dass** sich das wenigstens eine Biegeelement (32a, 32b, 32c) in der Ausgangsposition schräg zur Richtung der Vorspannkraft (V) des Federelements (38) erstreckt.

2. Vorrichtung (10) nach Anspruch 1,
wobei zur Positionierung des wenigstens einen Abstützelements (12) wenigstens ein Abschnitt der wenigstens einen ersten Positionierungseinheit (14) unter einer elastischen Deformation wenigstens eines elastisch deformierbaren Abschnitts relativ zu wenigstens einem stationären Abschnitt der wenigstens einen ersten Positionierungseinheit (14) verlagerbar ist.

3. Vorrichtung (10) nach Anspruch 1 oder 2,
wobei zur Positionierung des wenigstens einen Abstützelements (12) wenigstens ein Abschnitt der wenigstens einen zweiten Positionierungseinheit (16) unter einer elastischen Deformation wenigstens eines elastisch deformierbaren Abschnitts relativ zu wenigstens einem stationären Abschnitt der wenigstens einen zweiten Positionierungseinheit (16) verlagerbar ist.

4. Vorrichtung (10) nach einem der Ansprüche 1 bis 3,
wobei die wenigstens eine zweite Positionierungseinheit (16) wenigstens ein elastisch deformierbares Element (60) aufweist, das einen stationären Abschnitt (62) und einen zu dem stationären Abschnitt (62) relativ verlagerbaren Abschnitt (64) aufweist.

5. Vorrichtung (10) nach Anspruch 4,
wobei der stationäre Abschnitt (62) und der relativ verlagerbare Abschnitt (64) des wenigstens einen elastisch deformierbaren Elements (60) der zweiten Positionierungseinheit (16) über wenigstens ein Biegeelement (66a, 66b) miteinander verbunden sind.

6. Vorrichtung (10) nach einem der Ansprüche 1 bis 5,
wobei der stationäre Abschnitt (28, 62), der relativ verlagerbare Abschnitt (30, 64) und das wenigstens eine Biegeelement (32a, 32b, 32c, 66a, 66b) des wenigstens einen elastisch deformierbaren Elements (22, 60) der ersten Positionierungseinheit (14) und/oder der zweiten Positionierungseinheit (16) einstückig ausgebildet sind.

7. Vorrichtung (10) nach einem der Ansprüche 1 bis 6,
wobei das wenigstens eine Federmittel (38) der wenigstens einen ersten Positionierungseinheit (14) das wenigstens einen Biegeelement (32a, 32b, 32c) in eine vorbestimmte Richtung vorspannt.

8. Vorrichtung (10) nach einem der Ansprüche 1 bis 7,
wobei die wenigstens eine zweite Positionierungseinheit (16) wenigstens eine Stellschraube (28, 40, 70) zum Einstellen der Position des wenigstens einen Abstützelements (12) aufweist.

9. Vorrichtung (10) nach Anspruch 8,
wobei die wenigstens eine Stellschraube (24, 70) der wenigstens einen zweiten Positionierungseinheit (16) mit dem verlagerbaren Abschnitt (64) in Eingriff bringbar ist und sich an dem stationären Abschnitt (62) abstützt.

10. Vorrichtung (10) nach einem der Ansprüche 1 bis 9,
wobei die eingestellte Position der wenigstens einen zweiten Positionierungseinheit (16) mittels wenigstens eines Fixierelements (72) fixierbar ist.

11. Vorrichtung (10) nach einem der Ansprüche 1 bis 10,
wobei die wenigstens eine erste Positionierungseinheit (14) mit dem verlagerbaren Abschnitt (64) der wenigstens einen zweiten Positionierungseinheit (16) koppelbar ist.

12. Vorrichtung (10) nach Anspruch 11,
wobei zwischen der wenigstens einen erste Positionierungseinheit (14) und der wenigstens einen zweiten Positionierungseinheit (16) wenigstens eine Hubeinrichtung (20) vorgesehen ist.

13. Vorrichtung (10) nach einem der Ansprüche 1 bis 12,
wobei zumindest die wenigstens eine zweite Positionierungseinheit (16) mit einer Werkzeugmaschine (100) koppelbar ist.

14. Werkzeugmaschine (100) mit einer Vorrichtung (10) nach einem der Ansprüche 1 bis 13.

## Claims

1. Device (10) for supporting a workpiece (104) to be machined by a machine tool (100), comprising
- at least one support element (12) which can be brought into contact with the workpiece (104) to be supported,
- at least one first positioning unit (14) for positioning the at least one support element (12) in at least one first direction (Z),
- at least one second positioning unit (16) for positioning the at least one support element (12) in at least one second direction (X), the first direction (Z) and the second direction (X) being perpendicular to each other,
at least one of first or second positioning units (14, 16) being designed in such a way that the position of the at least one support element (12) is adjustable in the direction (X, Z) assigned to the respective positioning unit (14, 16) by elastic deformation of at least one elastically deformable section,
wherein the first positioning unit (14) has at least one spring means (38) and at least one adjusting screw (40), wherein, in order to adjust the position of the at least one support element (12), the at least one elastically deformable portion of the at least one first positioning unit (14) is displaceable by means of the at least one adjusting screw (40) against the pretensioning force (V) or in the direction of the pretensioning force (V) of the at least one spring means (38), wherein the at least one first positioning unit (14) has at least one elastically deformable element (22) which has a stationary portion (28) and a portion (30) which is displaceable relative to the stationary portion (28), the stationary portion (28) and the relatively displaceable portion (30) of the at least one elastically deformable element (22) of the first positioning unit (14) being connected to one another via at least one bending element (32a, 32b, 32c), **characterized in that** the at least one bending element (32a, 32b, 32c) in the initial position extends obliquely to the direction of the pretensioning force (V) of the spring element (38).

2. Device (10) according to claim 1,
wherein, for positioning the at least one support element (12), at least one portion of the at least one first positioning unit (14) is displaceable relative to at least one stationary portion of the at least one first positioning unit (14) under an elastic deformation of at least one elastically deformable portion.

3. Device (10) according to claim 1 or 2,
wherein, for positioning the at least one support element (12), at least one portion of the at least one second positioning unit (16) is displaceable relative to at least one stationary portion of the at least one second positioning unit (16) under an elastic deformation of at least one elastically deformable portion.

4. Device (10) according to any one of claims 1 to 3,
wherein the at least one second positioning unit (16) comprises at least one elastically deformable member (60) having a stationary portion (62) and a portion (64) displaceable relative to the stationary portion (62).

5. Device (10) according to claim 4,
wherein the stationary portion (62) and the relatively displaceable portion (64) of the at least one elastically deformable element (60) of the second positioning unit (16) are connected to each other via at least one bending element (66a, 66b).

6. Device (10) according to any one of claims 1 to 5,
wherein the stationary portion (28, 62), the relatively displaceable portion (30, 64) and the at least one bending element (32a, 32b, 32c, 66a, 66b) of the at least one elastically deformable element (22, 60) of the first positioning unit (14) and/or the second positioning unit (16) are formed integrally.

7. Device (10) according to any one of claims 1 to 6,
wherein the at least one spring means (38) of the at least one first positioning unit (14) biases the at least one bending element (32a, 32b, 32c) in a predetermined direction.

8. Device (10) according to any one of claims 1 to 7,
wherein the at least one second positioning unit (16) comprises at least one set screw (28, 40, 70) for adjusting the position of the at least one support element (12).

9. Device (10) according to claim 8,
wherein the at least one set screw (24, 70) of the at least one second positioning unit (16) is engageable with the displaceable portion (64) and is supported on the stationary portion (62).

10. Device (10) according to any one of claims 1 to 9,
wherein the set position of the at least one second positioning unit (16) can be fixed by means of at least one fixing element (72).

11. Device (10) according to any one of claims 1 to 10,
wherein the at least one first positioning unit (14) is couplable to the displaceable portion (64) of the at least one second positioning unit (16).

12. Device (10) according to claim 11,
wherein at least one lifting device (20) is provided between the at least one first positioning unit (14) and the at least one second positioning unit (16).

13. Device (10) according to any one of claims 1 to 12,
wherein at least the at least one second positioning unit (16) can be coupled to a machine tool (100).

14. Machine tool (100) comprising a device (10) according to any one of claims 1 to 13.

## Revendications

1. Dispositif (10) de soutien d'une pièce à usiner à l'aide d'une machine-outil (100), comprenant:
- au moins un élément de soutien (12) qui peut être amené en contact avec la pièce à soutenir (104),
- au moins une première unité de positionnement (14) destinée à positionner l'au moins un élément de soutien (12) dans au moins une première direction (Z),
- au moins une seconde unité de positionnement (16) destinée à positionner l'au moins un élément de soutien (12) dans au moins une seconde direction (X), la première direction (Z) et la seconde position (X) étant perpendiculaires l'une par rapport à l'autre,
au moins une unité de positionnement parmi la première ou la seconde unité de positionnement (14, 16) étant conçue de manière à ce que la position de l'au moins un élément de soutien (12) puisse être réglable par une déformation élastique d'au moins une section déformable élastiquement dans la direction associée à l'unité de positionnement respective (14, 16),
la première unité de positionnement (14) comprenant au moins un élément ressort (38) et au moins une vis de réglage (40), pour le réglage de la position de l'au moins un élément de soutien (12), l'au moins une section déformable élastiquement de l'au moins une unité de positionnement (14) pouvant être déplacée au moyen de l'au moins une vis de réglage (40) à l'encontre de la force de précontrainte (V) ou dans la direction de la force de précontrainte (V) de l'au moins un élément ressort (38), l'au moins une première unité de positionnement (14) comportant au moins un élément déformable élastiquement (22), qui comporte une section fixe (28) et une section (30) mobile par rapport à la section fixe (28), la section fixe (28) et la section mobile (30) de l'au moins un élément déformable élastiquement (22) de la première unité de positionnement (14) étant reliés les uns aux autres par au moins un élément de flexion (32a, 32b, 32c), **caractérisé en ce que** l'au moins un élément de flexion (32a, 32b, 32c) s'étend dans la position de sortie obliquement par rapport à la direction de la force de précontrainte (V) de l'élément ressort (38).

2. Dispositif (10) selon la revendication 1,
dans lequel pour le positionnement de l'au moins un élément de soutien (12) au moins une section de l'au moins une première unité de positionnement (14) peut être déplacée par la déformation élastique d'au moins une section déformable élastiquement par rapport à au moins une section fixe de l'au moins une première unité de positionnement (14).

3. Dispositif (10) selon la revendication 1 ou la revendication 2,
dans lequel pour le positionnement de l'au moins un élément de soutien (12) au moins une section de l'au moins une seconde unité de positionnement (16) peut être déplacée par la déformation élastique d'au moins une section déformable élastiquement par rapport à au moins une section fixe de l'au moins une seconde unité de positionnement (16).

4. Dispositif (10) selon l'une quelconque des revendications 1 à 3,
dans lequel l'au moins une seconde unité de positionnement (16) comporte au moins un élément déformable élastiquement (60) qui comporte une section fixe (62) et une section mobile (64) par rapport à la section fixe (62).

5. Dispositif (10) selon la revendication 4,
dans lequel la section fixe (62) et la section mobile (64) de l'au moins un élément déformable élastiquement (60) de la seconde unité de positionnement (16) sont reliées l'une à l'autre par au moins un élément de flexion (66a, 66b).

6. Dispositif (10) selon l'une quelconque des revendications 1 à 5,
dans lequel la section fixe (28, 62), la section mobile (30, 64) et l'au moins un élément de flexion (32a, 32b, 32c, 66a, 66b) de l'au moins un élément déformable élastiquement (22, 60) de la première unité de positionnement (14) et/ou de la seconde unité de positionnement (16) sont conçus d'un seul tenant.

7. Dispositif (10) selon l'une quelconque des revendications 1 à 6,
dans lequel l'au moins un élément ressort (38) de l'au moins une première unité de positionnement (14) précontraint l'au moins un élément de flexion (32a, 32b, 32c) dans une direction prédéterminée.

8. Dispositif (10) selon l'une quelconque des revendications 1 à 7,
dans lequel l'au moins une seconde unité de positionnement (14) comporte au moins une vis de réglage (28, 40, 70) servant à régler la position de l'au moins un élément de soutien (12).

9. Dispositif (10) selon la revendication 8,
dans lequel l'au moins une vis de réglage (24, 70) de l'au moins une seconde unité de positionnement (16) peut venir se loger dans la section mobile (64) et s'appuie sur la section fixe (62).

10. Dispositif (10) selon l'une quelconque des revendications 1 à 9,
dans lequel la position réglée de l'au moins une seconde unité de positionnement (16) peut être fixée au moyen d'au moins un élément de fixation (72).

11. Dispositif (10) selon l'une quelconque des revendications 1 à 10,
dans lequel l'au moins une première unité de positionnement (14) peut s'accoupler à la section mobile (64) de l'au moins une seconde unité de positionnement (16).

12. Dispositif (10) selon la revendication 11,
dans lequel entre l'au moins une première unité de positionnement (14) et l'au moins une seconde unité de positionnement (16) est disposé au moins un dispositif de levage (20).

13. Dispositif (10) selon l'une quelconque des revendications 1 à 12,
dans lequel au moins l'au moins une seconde unité de positionnement (16) peut être accouplée à une machine-outil (100).

14. Machine-outil (100) comprenant un dispositif (10) selon l'une quelconque des revendications 1 à 13.
